Europäisches Patentamt

European Patent Office

Office européen des brevets

(19)

(11) **EP 0 965 928 A2**

(12) **EUROPEAN PATENT APPLICATION**

(43) Date of publication:
    **22.12.1999 Bulletin 1999/51**

(51) Int Cl.$^6$: **G06F 17/30**

(21) Application number: **99303624.3**

(22) Date of filing: **10.05.1999**

(84) Designated Contracting States:
    **AT BE CH CY DE DK ES FI FR GB GR IE IT LI LU
    MC NL PT SE**
    Designated Extension States:
    **AL LT LV MK RO SI**

(30) Priority: **20.05.1998 US 81660**

(71) Applicant: **LUCENT TECHNOLOGIES INC.
    Murray Hill, New Jersey 07974-0636 (US)**

(72) Inventors:
    • **Acharya, Swarup
      New Providence, New Jersey 07974 (US)**
    • **Matias, Yossi
      Tel Aviv 69697 (IL)**

    • **Gibbons, Phillip B.
      Westfield, New Jersey 07090 (US)**
    • **Poosala, Viswanath
      Highland Park, New Jersey 08904 (US)**
    • **Ramaswamy, Sridhar
      Scotch Plains, New Jersey 07076 (US)**
    • **Suel, Torsten
      Springfield, New Jersey 07081 (US)**

(74) Representative:
    **Johnston, Kenneth Graham et al
    Lucent Technologies (UK) Ltd,
    5 Mornington Road
    Woodford Green Essex, IG8 OTU (GB)**

(54) **System and techniques for fast approximate query answering**

(57)    An approximate query answering system that provides fast, highly-accurate approximate answers to database queries. The system provides these approximate answers using small, pre-computed synopsis data structures (samples, counts, etc.) from the underlying database and accuracy guarantees without any a priori assumptions on either the data distribution, the order in which the base data is loaded, or the layout of the data on the disks. The system also provides fast approximate ansers for queries with selects, aggregates, group bys and/or joins (especially, the multi-way foreign key joins that are popular in OnLine Analytical Processing (OLAP)). The system uses several new techniques for improving the accuracy of approximate query answers for this class of queries, including, (1) join sampling to significantly improve the approximation quality and (2) biased sampling to overcome the problem of group size disparities in group by operations. Moreover, the system uses efficient algorithms for incremental maintenance of join samples, biased samples, and all other synopses used in the current system. The system remains effective even in the presence of data distribution changes.

FIG. 2

EP 0 965 928 A2

**Description**

**Technical Field**

This invention relates to database query systems and, more particularly, to an approximate query answering system and associated techniques for providing approximate answers to queries, particularly in large data recording and warehouse environments.

**Background of the Invention**

Approximate query answering is a term used to identify the techniques and methods of providing an estimated answer, with an accuracy guarantee (for example, an error range), for a query to a database system. Such a database system maybe used to improve the query response performance of data base systems by reducing the time required by the system to respond to queries.

In large data recording and warehousing environments, it is often advantageous to provide fast, approximate answers to queries. The goal is to provide an estimated response in orders of magnitude less time than the time required to compute an exact answer. This is accomplished by avoiding or minimizing the number of accesses to the base data and providing approximate answers even when the base data is unavailable.

Traditional query processing has focused solely on providing exact answers to queries, in a manner that seeks to minimize response time and maximize throughput. However, there are a number of environments for which the response time for an exact answer is often slower than is desirable. First, in large data recording and warehousing environments, providing an exact answer to a complex query can take minutes to hours, due to the amount of disk I/O required. For environments with terabytes or more of data, even a single scan of the data can take tens of minutes. For example, scanning 3 TBs of data using parallel reads from 100 disks at a time with 20 MB/s from each disk takes 25 minutes. Second, in distributed data recording and warehousing environments, some of the data may be remote, resulting in slow response times, and may even be currently unavailable, so that an exact answer is not an option until the data again becomes available. Such a distributed environment is described by C. Faloutsos et al. in "Recovering information from summary data," *Proc. 23rd International Conf. on Very Large Data Bases,* pp. 36-45, August 1997. Finally, in environments with stringent response time requirements, even a single access at a particular level of the storage hierarchy may be unacceptably slow, for example, for a sub-millisecond response time, a single disk access is too slow.

Environments for which providing an exact answer results in undesirable response times have motivated our study of techniques for providing *approximate* answers to queries. One of our goals is to provide an estimated response in orders of magnitude less time than the time necessary to compute an exact answer, by avoiding or minimizing the number of accesses to the base data.

There are a number of scenarios for which an exact answer may not be required, and a user may prefer a fast, approximate answer. For example, during a drill-down query sequence in ad-hoc data mining, the earlier queries in the sequence are used solely to determine what the interesting queries are, for example, as described by J. M. Hellerstein et al., "Online aggregation," *Proc. ACM SIGMOD International Conf. on Management of Data,* pp. 171-182, May 1997. An approximate answer can also provide feedback on how well-posed a query is. Moreover, it can provide a tentative answer to a query when the base data is unavailable. Another example is when the query requests numerical answers, and the full precision of the exact answer is not needed, for example, a total, average, or percentage for which only the first few digits of precision are of interest (such as the leading few digits of a total in the millions, or the nearest percentile of a percentage). To illustrate this example, consider a standard Structured Query Language (SQL) group by query to a sales database asking for aggregate values for the average and minimum sales grouped by region and type of store within each region. Table 1 provides a typical exact answer that would result from such a group by request. To obtain this answer, it is necessary to search every record in the database and to calculate the average and minimum sales values. The time required for such an operation can range from several seconds for small local databases to tens of minutes for large data warehouse environments. In contrast, an approximate answer provides an estimated value and an accuracy measure.

TABLE 1

| Region | Type | Average Sales | Minimum Sales |
|--------|------|---------------|---------------|
| eastern | retail | 12435 | 4035 |
| eastern | outlet | 7389 | 1227 |
| central | retail | 14837 | 3928 |

TABLE 1 (continued)

| Region | Type | Average Sales | Minimum Sales |
|---|---|---|---|
| western | retail | 16726 | 4399 |
| western | outlet | 8874 | 389 |

By way of introduction to the present invention, a goal is to provide fast approximate answers to queries. Table 2 shows an example approximate answer to the same group by query as in Table 1 that provides accuracy measures as confidence intervals for each estimate based on a specified confidence probability. Note that in several cases an upper bound, denoted a *sanity bound,* where the average and minimum sales are shown as < 500 instead of as an estimate. Also, note that an approximate answer can include rows (tuples) not provided in the exact answer, as in this example (for the *central outlet* group), and vice-versa. A tuple is a single, complete row in an answer to a query, for example, the first tuple in Table 2 is (eastern, retail, 12000 ± 800, 4100 ± 400). Finally, note that techniques for fast approximate answers can also be used in a more traditional role within the query optimizer to estimate plan costs; since such an application demands very fast response times but not exact answers.

TABLE 2

| Region | Type | Average Sales | Minimum Sales |
|---|---|---|---|
| eastern | retail | 12000 ± 800 | 4100 ± 400 |
| eastern | outlet | 7200 ± 800 | 1200 ± 400 |
| central | retail | 14500 ± 800 | 3800 ± 400 |
| central | outlet | < 500 | < 500 |
| western | retail | 17000 ± 800 | 4100 ± 400 |
| western | outlet | 8900 ± 800 | < 500 |

Despite some recent work in approximate query answers, we believe that the state-of-the-art is quite limited in its speed, scope and accuracy.

Hellerstein *et al.* proposed a framework for approximate answers of aggregation queries called *online aggregation,* in which the base data is scanned in a certain order at query time and the approximate answer for an aggregation query is updated as the scan proceeds (continuous reporting). Aggregation queries specify a predicate and an aggregation function (for example, count, average, or sum) on columns in database tuples; an exact answer returns the result of applying the aggregation function over all tuples satisfying the predicate. A graphical display depicts the answer and a (decreasing) confidence interval as the scan proceeds, so that the user may stop the process at any time. The only synopses maintained are the indexes to enable special treatment of small sets in group by operations in database queries. Synopses are small, precomputed summary data structures (samples, counts, etc.) of the underlying base data. Since the reported tuples are retrieved from the base data at query time, as will be described herein, the response time will be orders of magnitude slower than in the present invention. "Query time" is the time between when a query is posed and a response is generated. If the scan order for a group is random, then randomly-selected certain tuples with guaranteed accuracy measures will be reported. A certain tuple is a tuple that is in the exact answer. Moreover, considering all groups, biased-selected certain tuples will be reported with the bias in favor of the small sets, as desired. Biased-selected certain tuples are tuples reported in the exact answer biased according to a specific criterion. The disadvantage of a random scan order is that the response time is even slower. If the scan order is the order of the data on the disks, then the response time is faster than with random order, but now the reported tuples are arbitrary certain tuples with heuristic accuracy measures (which can be quite inaccurate).

Other systems support limited on-line aggregation features; for example, a Red Brick system supports running count, average, and sum. Since the scan order used to produce these aggregations is not random, only heuristic accuracy measures are possible, and the accuracy can be quite poor. The response time is slow since the tuples are retrieved from the base data at query time; however, since there are no synopses to maintain, there are no overheads contributing to the update time and no footprint for synopses. "Update time" is the time required to keep the synopses up-to-date as changes occur in the database, and "footprint" is the size of the memory required to store the synopses.

There have been several recent works on "fast-first" query processing, whose goal is to quickly provide a few tuples of the query answer. Bayardo and Miranker describe techniques for optimizing and executing queries using pipelined, nested-loop joins in order to minimize the latency until the first answer is produced in their "Processing queries for first-few answers," *Proc. 5th International Conf on Information and Knowledge Management,* pp. 45--52, November 1996. A join occurs when, in creating an answer to a database query, only those attributes of interest (for example, specific field data, such as sales figures for individual part numbers) from the different relations (tables) within the database are combined, based on a key, to provide the answer in a new relation. An Oracle Rdb system provides support for running multiple query plans simultaneously, in order to provide for fast-first query processing. Both of these systems report arbitrary, certain representative tuples, by accessing the base data at query time. No size estimates or other meta-information are provided with the representative tuples. No synopses need be maintained.

In an approximate query processor, developed by Vrbsky and Liu and described in S. V. Vrbsky and J. W. S. Liu, "Approximate---a query processor that produces monotonically improving approximate answers," *IEEE Trans. on Knowledge and Data Engineering,* 5(6):1056-1068, 1993, an approximate answer to a set-valued query is any superset of the exact answer that is a subset of the cartesian product. A set-valued query returns a set of tuples as the exact answer. The goal of the query processor is to produce monotonically improving approximate answers, by decreasing the superset as the processing proceeds. The base data is stored in small blocks and various indexed class hierarchies are constructed that categorize the blocks according to ranges of attributes. The query processor uses various class hierarchies to iteratively fetch blocks relevant to the answer, producing tuples certain to be in the answer while narrowing the possible classes that contain the answer. There are no bounds provided on the accuracy, no size estimates or other meta-information, and the representative tuples are arbitrary certain tuples. Other related query processors (see the references in Vrbsky and Liu, above) likewise operate on the base data at query time and define an approximate answer for set-valued queries to be subsets and supersets that converge to the exact answer.

Table 3 provides a summary of the comparison between these previous works and one embodiment of the present system, our Aqua system which is described in detail herein, we evaluate the systems using the following five metrics for approximate query engines (I) *Coverage:* the range of queries for which approximate answers can be provided; (2) *Response Time:* the time to provide an approximate answer for a query; (3) *Accuracy:* the accuracy of the answers provided; (4) *Update Time:* the overheads in keeping the systems synopses up-to-date; and (5) *Footprint:* the storage requirements for the systems synopses. This comparison is of course unfair, since none of these other systems (other than approximate) were designed to be approximate query engines. However, it reflects the state-of-the-art in approximate query engines prior to our Aqua system.

Barbara *et al.* present a survey of *data reduction* techniques which can be used for a variety of purposes, including providing approximate query answers in their paper D. Barbara *et al.,* "The New Jersey data reduction report, " *Bulletin of the Technical Committee on Data Engineering,* 20(4):3-45, 1997. Also, we introduce two sampling-based synopses,

TABLE 3

| system | design goal/coverage | response time | accuracy | update time | footprint |
|---|---|---|---|---|---|
| random [Hellerstein] | online aggregation | quite slow | good ifno joins | fast | small |
| scan [Hellerstein] | online aggregation | slow | poor | fast | small |
| Red Brick | running count, avg, sum | slow | poor | very fast | none |
| Oracle Rdb, [Bayardo & Miranker] | fast-first on any query | fairly slow | poor | very fast | none |
| approximate [Vrbsky & Liu] | general approx. query eng. | slow | poor | fairly fast | small |
| Aqua | general approx. query eng. | fast | good | modest | modest |

concise samples and counting samples, that can be used to obtain larger samples for the same footprint and to improve approximate query answers for hot list queries in P. B. Gibbons and Y. Matias, "New sampling-based summary statistics for improving approximate query answers," Technical Report, Bell Laboratories, Murray Hill, NJ, November 1997 and P. B. Gibbons et al., "Aqua project white paper," Technical Report, Bell Laboratories, Murray Hill, NJ, December 1997, both incorporated herein by reference. A "concise sample" is a uniform random sample of the data set such that values appearing more than once in the sample are represented as a value and a count. A "counting sample" is a variation on a concise sample in which the counts are used to keep track of all occurrences of a value inserted into the data warehouse since the value was selected for the sample. Olken and Rotem present techniques for maintaining random sample views in their "Maintenance of materialized views of sampling queries," *Proc. 8th IEEE International Conf on*

*Data Engineering,* pp. 632-641, February 1992. Also, we propose and study *approximate data structures* that provide fast approximate answers in Y. Matias et al., "Dynamic generation of discrete random variates," *Proc. 4th ACM-SIAMSymp. on Discrete Algorithms,* pp. 361-370, January 1993; Y. Matias et al., "Approximate data structures with applications," *Proc. 5th ACM-SIAM Symp. on Discrete Algorithms,* pp. 187-194, January 1994; and Y. Matias et al., "Performance evaluation of approximate priority queues," presented at *DIMACS Fifth Implementation Challenge: Priority Queues, Dictionaries, and Point Sets,* October 1996. For example, a priority queue data structure supports the operations insert, findmin, and deletemin; our approximate priority queue supports these operations with smaller overheads while reporting an approximate min in response to findmin and deletemin operations. These data structures have linear space footprints.

Other works on incremental maintenance of approximate synopses include: P. Flajolet and G. N. Martin, "Probabilistic counting," *Proc. 24th IEEE Symp. on Foundations of Computer Science,* pp. 76-82, October 1983; P. Flajolet and G. N. Martin, "Probabilistic counting algorithms for data base applications," *J. Computer and System Sciences,* 31:182-209, 1985; K.-Y. Whang, B. T. Vander-Zanden, and H. M. Taylor, "A linear-time probabilistic counting algorithm for database applications," *ACM Transactions on Database Systems,* 15(2):208-229, 1990; P. J. Haas, J. F. Naughton, S. Seshadri, and L. Stokes, "Sampling-based estimation of the number of distinct values of an attribute," *Proc. 21st International Conf. on Very Large Data Bases,* pp. 311-322, September 1995; N. Alon, Y. Matias, and M. Szegedi, "The space complexity of approximating the frequency moments," *Proc. 28th ACMSymp. on the Theory of Computing,* pp. 20-29, May 1996; P. B. Gibbons, Y. Matias, and V. Poosala, "Fast incremental maintenance of approximate histograms," *Proc. 23rd International Conf. on Very Large Data Bases,* pp. 466-475, August 1997; and V. Ganti and V. Poosala, "Space-efficient approximation of the data cube," Technical report, Bell Laboratories, Murray Hill, New Jersey, November 1997. Finally, there has been considerable work on sampling-based estimation algorithms for use within a query optimizer. See, W.-C. Hou, G. _zsoyo□lu, and B. K. Taneja, "Statistical estimators for relational algebra expressions," *Proc. 7th ACMSymp. on Principles of Database Systems,* pp. 276-287, March 1988; W.-C. Hou, G. _zsoyo□lu, and B. K. Taneja, "Processing aggregate relational queries with hard time constraints," *Proc. ACM SIGMOD International Conf on Management of Data,* pp. 68-77, June 1989; R. J. Lipton and J. F. Naughton, "Estimating the size of generalized transitive closures," *Proc. 15th International Conf. on Very Large Data Bases,* pp. 165-172, August 1989; R. J. Lipton and J. F. Naughton, "Query size estimation by adaptive sampling," *Proc. 9th ACM Symp. on Principles of Database Systems,* pp. 40-46, April 1990; R. J. Lipton, J. F. Naughton, and D. A. Schneider, "Practical selectivity estimation through adaptive sampling," *Proc. ACM SIGMOD International Conf. on Management of Data,* pp. 1-12, May 1990; W.-C. Hou, G. _zsoyo□lu, and E. Dogdu, "Error-constrained COUNT query evaluation in relational databases," *Proc. ACM SIGMOD International Conf. on Management of Data,* pp. 278-287, May 1991; P. J. Haas and A. N. Swami, "Sequential sampling procedures for query size estimation," *Proc. ACM SIGMOD International Conf. on Management of Data,* pp. 1-11, June 1992; Y. Ling and W. Sun, "A supplement to sampling-based methods for query size estimation in a database system," *SIGMOD Record,* 21(4):12-15, 1992; R. J. Lipton, J. F. Naughton, D. A. Schneider, and S. Seshadri, "Efficient sampling strategies for relational database operations," *Theoretical Computer Science,* 116(1-2): 195-226, 1993; P. J. Haas, J. F. Naughton, S. Seshadri, and A. N. Swami, "Fixed-precision estimation of join selectivity," *Proc. 12th ACM Symp. on Principles of Database Systems,* pp. 190-201, May 1993; P. J. Haas, J. F. Naughton, and A. N. Swami, "On the relative cost of sampling for join selectivity estimation," *Proc. 13th ACM Symp. on Principles of Database Systems,* pp. 14-24, May 1994; R. J. Lipton and J. F. Naughton, "Query size estimation by adaptive sampling," *J. Computer and System Sciences,* 51(1): 18-25, 1995; P. J. Haas, J. F. Naughton, S. Seshadri, and L. Stokes, "Sampling-based estimation of the number of distinct values of an attribute," *Proc. 21st International Conf. on Very Large Data Bases,* pp. 311-322, September 1995; and S. Ganguly, P. B. Gibbons, Y. Matias, and A. Silberschatz, "Bifocal sampling for skew-resistant join size estimation," *Proc. 1996 ACM SIGMOD International Conf on Management of Data,* pp. 271-281, June 1996.

None of this previous work uses the new techniques described in this application.

Therefore, there is a need for a system and new techniques to provide fast, approximate answers to (1) join queries based on pre-computed samples of join results (denoted "join samples") by maintaining a join sample for each relation in the database, and (2) group by queries based on pre-computed biased samples of group items.

## Summary of the Invention

The problems and deficiencies of prior art approximate query answering systems are overcome by the principles of the present invention and our development of an Approximate QUery Answering (AQUA) system. We believe that AQUA is the first system designed to provide fast, highly-accurate approximate answers to a broad class of aggregate and set-valued queries. The system provides approximate answers in orders of magnitude less response time than previous systems, by typically avoiding disk accesses at query time. This is accomplished by (1) maintaining a number of synopses on the data; (2) updating these synopses primarily by observing the new data as it is loaded into the data warehouse; (3) providing discrete reporting (a single approximate answer, as determined from all the synopses at hand); (4) providing accuracy guarantees without any a priori assumptions on either the data distribution, the order in which the base data is loaded, or the physical layout of the data on the disks; and (5) having a footprint orders of magnitude smaller than the data warehouse, by keeping memory-resident any synopsis that is frequently updated or used, or both, to respond to queries. Currently, the system provides fast approximate answers for queries with selects, aggregates, group bys, and/or joins (especially, the multi-way foreign key joins that are popular in OnLine Analytical Processing (OLAP)).

The system provides an approximate query engine that observes new data as it is loaded into the data warehouse and maintains small synopsis data structures (samples, counts, etc.). These synopsis data structures can be used to provide fast, approximate answers to queries without accessing the database at query time.

The system uses several new techniques to improve the accuracy of approximate query answers for this class of queries. First, the system uses join sampling to significantly improve the approximation quality. Join sampling is the creation and maintenance of a single join sample for each individual base relation, using probabilistic sampling of foreign key joins, in an acyclic data warehouse schema. Second, the system uses biased sampling to overcome the problem of small groups in group-by operations. Biased sampling is the creation and maintenance of a table of groups, by biasing the samples according to the groups, that result from database group by operations. Finally, the system uses efficient algorithms for incremental maintenance of join samples, biased samples, and all other synopses used in the system. Incremental maintenance is the updating of a synopsis to reflect updates to the database such as insertions and deletions of data.

These and a representative embodiment of the present invention will be better understood from studying the drawings and the detailed descriptions of one embodiment of the invention. One embodiment of the present invention involves a computer-readable medium having computer-executable instructions for updating, in response to a query of a database, a plurality of data samples in memory associated with an approximate query engine, where the data samples require less space than the data stored in the database; determining whether the query is inserting or deleting data from the database, and if the query is inserting data then, for each tuple, (a) determining the database relation for the tuple, (b) adding the tuple to an uniform random sample associated with the relation based on a predetermined probability, and (c) if the tuple is added to the uniform random sample, (i) computing a new join data sample tuple using the tuple, (ii) adding the new join data sample tuple to a join data sample associated with the relation, and (iii) if the uniform random sample exceeds a maximum size, (1) randomly selecting one of the tuples in the uniform random sample, (2) deleting the randomly selected tuple from the uniform random sample, and (3) deleting the join data sample tuple associated with the tuple from the join data sample; and if the query is deleting data, (a) determining a relation for the tuple, (b) if the tuple is in an existing uniform random sample, (i) deleting the tuple from the existing uniform random sample, and (ii) deleting the join data sample tuple associated with the tuple from the associated join data sample, and (c) if any of the plurality of uniform random samples becomes less than a predetermined minimum required size, repopulating each of the plurality of uniform random samples found to be less than the predetermined minimum required size with new tuples from the database.

## Brief Description of the Drawings

In the drawings,

FIG. 1 illustrates a traditional data warehouse system.

FIG. 2 illustrates a data warehouse system in which the inventive method may be practiced.

FIG. 3 illustrates a sample exact answer to a standard database query.

FIG. 4 illustrates a sample approximate answer to a standard database query.

FIG. 5 illustrates the relationship between exact and approximate answers.

FIG. 6 illustrates a directed acyclic graph with only foreign key joins.

FIG. 7 illustrates the steps involved in processing a query in the approximate query engine.

FIG. 8 illustrates steps in a first embodiment of the inventive method and computer-implemented invention.

FIG. 9 illustrates steps in maintaining join samples in a first embodiment of the inventive method and computer-implemented invention.

FIG. 10 illustrates steps in maintaining join samples in a second embodiment of the inventive method and computer-implemented invention.

## Detailed Description

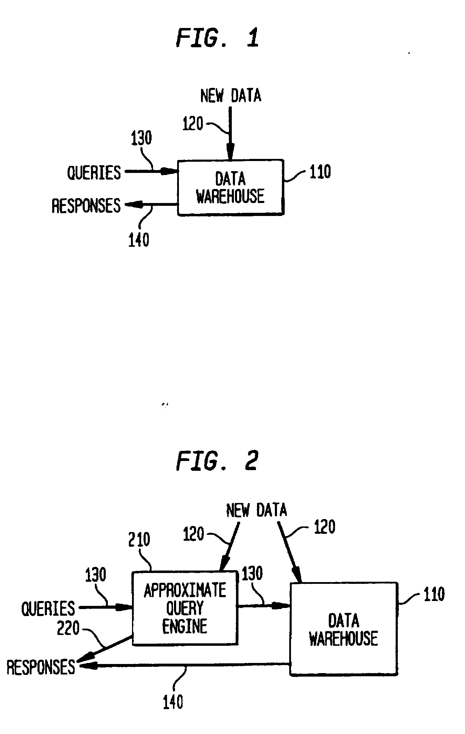

FIG. 1 depicts a traditional data warehouse system, in which the base data resides in a data warehouse 110 that is updated as new data 120 arrives, and queries 130 are answered with exact responses 140 calculated from the data warehouse.

FIG. 2 depicts a system for approximate query answering, which includes an approximate query engine 210 positioned between the queries 130 and the data warehouse 110. We named our approximate query engine AQUA. While it is illustrative of one embodiment of the present invention, others may come to mind from the study of AQUA To facilitate answering queries 130, the approximate query engine 210 can store various summary information on the data, which we denote *synopsis data structures* or *synopses.* Synopsis data structures or synopses are small, precomputed summary data structures (samples, counts, etc.) of the underlying base data. A synopsis data structure captures the important, highlight information on the data in a concise representation, i.e., it provides a "synopsis" ofthe data. It is important to note that the synopsis data structures are *summaries* of the information found in the database and *not mere replicates.* Examples of synopses for a relational data warehouse include histograms and sample rows of large relations and all the rows of small relations, projected on the columns of interest. These synopses can be maintained by: (1) observing the new data 120 as it is loaded into the data warehouse 110, (2) periodically returning to the data warehouse 110 to update the information, and/or (3) returning to the data warehouse 110 at query time.

Queries 130 are sent to the approximate query engine 210. Whenever possible, the approximate query engine 210 uses its synopses to promptly return a response 220 to the query, consisting of an approximate answer and an accuracy measure (for example, a 95% confidence interval for numerical answers). In *continuous reporting* (denoted "progressive resolution refinement" by Barbara et al.), the approximate query engine 210 proceeds to provide a series of (approximate answer, accuracy measure) pairs for the query 130, with each subsequent pair providing a more accurate answer (as in Hellerstein et al.). In *discrete reporting,* only one or a few such pairs are provided by the approximate query engine 210. The approximate query engine 210 can also return an estimated time for computing an exact answer, as determined by the approximate query engine 210 and/or a traditional query optimizer. The user posing the query 130 can decide whether to abort the query processing and be content with the current approximate answer or to proceed to the next approximation or to an exact answer from the base data. Alternatively, the user may pose a new query, while allowing the current query 130 to proceed, in order to allow for subsequent verification of the approximate answer.

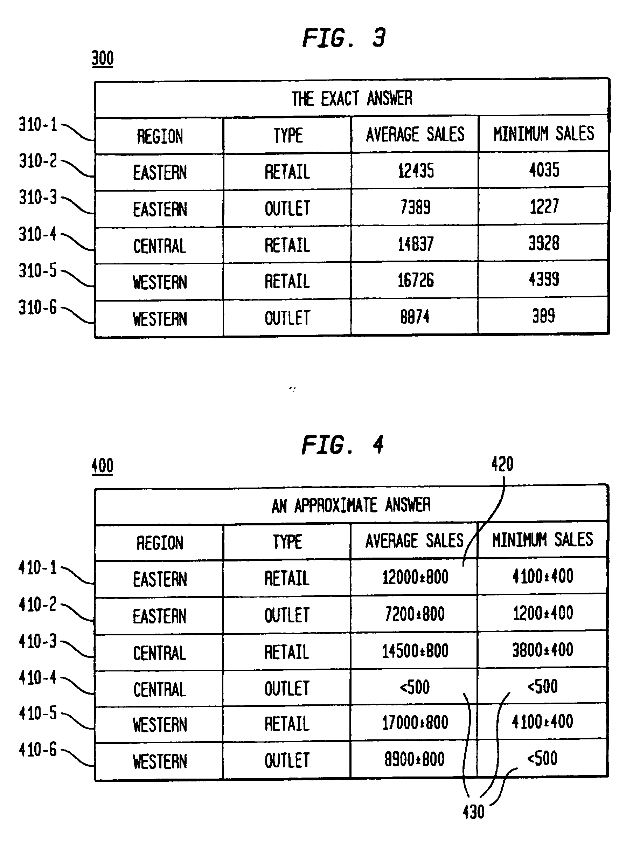

FIG. 3 illustrates a sample exact answer 300 to a standard group by query to a sales database asking for aggregate values for the average and minimum sales grouped by region and type of store within each region. The answer returns a set *of n* rows of data (tuples) 310-j, j=1, 2, ... n, with exact values calculated from the data in the database.

FIG. 4 illustrates a sample approximate answer 400 to the same standard database query as used to obtain the result in FIG. 3. The answer returns a set of *n* rows of data (tuples) 410-j, j=1, 2, ... n, with approximate values derived from the synopsis data structures maintained by the approximate query engine 210. For queries whose answer is an aggregate value (for example, the result of AVG, SUM, COUNT), the notion of an approximate answer is an intuitive one: it is simply an estimated value for the answer and an accuracy measure. This can be extended to a collection of aggregate values 410, such as arises with an SQL *group by* operation: an approximate answer is an (estimated value, accuracy measure) pair 420 for each such aggregate value, labeled with the attributes that define the aggregate (the group). In FIG. 4, the approximate answer provides accuracy measures as confidence intervals for each estimate, for some confidence probability that would also be specified (for example, 95% confidence intervals). Note that in several cases an upper bound, denoted a *sanity bound* 430, is provided instead of an estimate. Finally, note that an approximate answer 400 can include tuples not in the exact answer, as in FIG. 4 for the *central outlet* group 410-4, and vice-versa.

For set-valued queries, it is less intuitive what an approximate answer should be. Since the number of tuples in the exact answer may be quite large, for efficiency, the system may not return a tuple for each tuple in the exact answer. In order to ensure very fast response times, the system seeks to return only a small number of representative tuples, together with meta-information on the entire set of tuples. Thus, an approximate answer consists of both estimates on meta-information for the exact answer, including an estimated (or actual) count of the number of tuples in the exact answer, and representative tuples from the exact answer. Each meta-information estimate includes an accuracy measure. Representative tuples can be classified as *certain* or *possible,* depending on whether or not the approximate engine is certain that the tuple is in the exact answer as is known in the art. Possible tuples are reported along with some measure of their similarity to tuples in the exact answer. Examples include tuples that are in the exact answer with a given confidence probability or tuples that may not meet a selection criterion (such as a min or a max) that is computed by the query, but are close to it.

Certain tuples are classified as *randomly-selected* if the tuples reported are a uniform random sample of the set of output tuples, as *biased-selected* if the tuples reported are biased according to a specific criterion, or as *arbitrary.* Randomly-selected tuples have the advantage that they are uniformly representative of the entire set of output tuples. Biased-selected tuples have the advantage if the bias criterion is in line with the "most interesting" output tuples, for example, the query requests tuples that lie above a certain threshold and the reported tuples are biased towards those that exceed the threshold by the largest amount. In such cases, biased-selected may be preferred to randomly-selected. On the other hand, if the criterion for what makes an output tuple interesting is not known, or there are conflicting criteria, then a uniform random sample is a natural choice. Representative tuples may or may not contain all the columns in the full tuple.

There are a number of possible accuracy measures for an approximate answer, depending on the type of query. For numerical answers, a natural accuracy measure is a confidence interval, consisting of an accuracy interval $[a, b]$ and a confidence probability $p$. The confidence interval asserts that the exact value is between $a$ and $b$ with probability at least $p$. It is also useful to have the approximate answer be an *unbiased* estimator of the exact value, that is, the expected value of the approximate answer is equal to the exact value. Accuracy measures and similarity measures can be classified as either (provably) *guaranteed* or *heuristic.* Common heuristic measures include those based on assumptions on the distribution of the values within a histogram bucket, on the independence of attributes, on the uniformity of joins, and on the randomness of tuples read sequentially from disk. Although guaranteed measures are preferred, in some cases it is difficult to obtain tight guaranteed bounds, and heuristic measures may be more suitable.

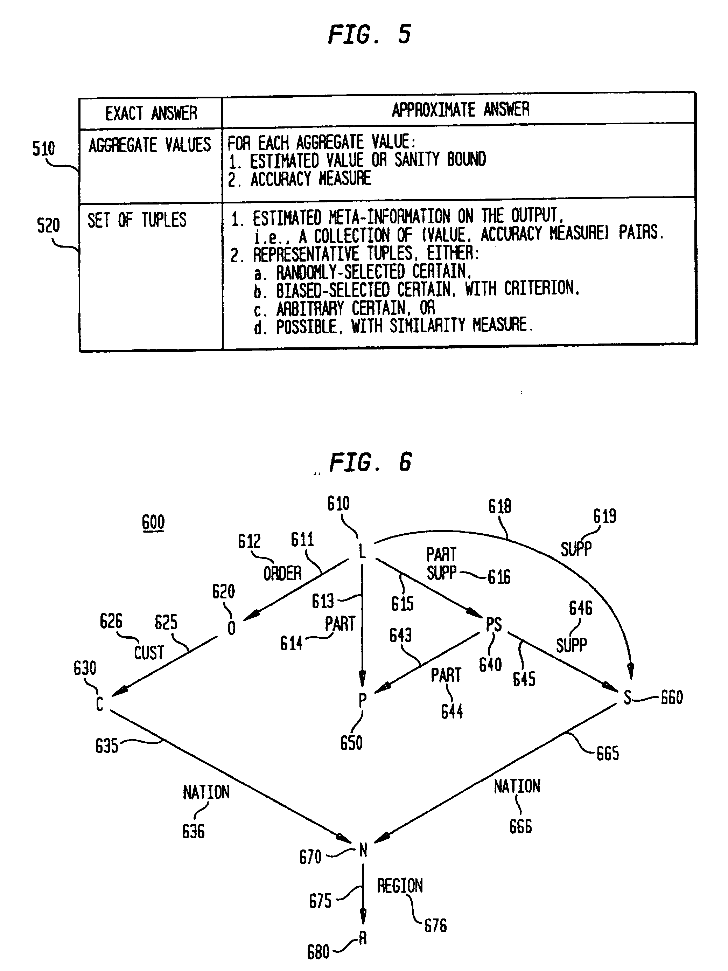

FIG. 5 illustrates one embodiment of the relationship between the types of exact answers and their associated approximate answers. For aggregate values 510, the approximate answer would contain an estimated value or sanity bound with an accuracy measure, where the accuracy measure is a confidence interval. For set-valued queries 520, the approximate answer would contain estimated meta-information on the exact answer and a set of representatives tuples. The "meta-information" is an estimate and confidence interval for the size of the exact answer and representative tuples are of type (a), (b), (c) or (d), depending on the query.

FIG. 6 illustrates a directed acyclic graph 600, $G$, with a vertex for each base relation and a directed edge from a vertex $u$ to a vertex $v⑤u$ if there are one or more attributes in (the relation corresponding to) $u$ that form a foreign key for (the relation corresponding to) $v$. This provides an example graphical representation of the database schema, depicting the relationships between the relations in the database. This example illustrates the schema for the TPC-D benchmark.

In FIG. 6, vertices L 610, O 620, C 630, PS 640, P 650, S 660, N 670, and R 680, correspond to relations within the database. Vertices L 610 and O 620 are linked by directed edge 611 using the foreign key Order 612 to identify specific records within O 620. Another directed edge 625 links O 620 to C 630 using the foreign key Cust 626, yet another directed edge 635 links C 630 to N 670 using the foreign key Nation 636, and another directed edge 675 links N 670 to R 680 using the foreign key Region 676. Vertex L 610 is also linked to Vertex P 650 by another directed edge 613 using the foreign key Part 614. Additionally, Vertex L 610 is linked to Vertex S 660 by another directed edge 618 using the foreign key Supp 619, and S 660 is linked to N 670 by another directed edge 665 using the foreign key Nation 666. Finally, Vertex L 610 is linked to Vertex PS 640 by another directed edge 615 using the combined foreign key Part and Supp 616, and PS 640 is then linked to P 650 by another directed edge 643 using foreign key Part 644 and to S 660 by another directed edge 645 using foreign key Supp 646.

A natural set of synopses for an approximate query engine 210 would include a uniform random sample of each base relation. However, the problem with using samples of base relations to provide approximate answers for queries with joins is that, in general, the quality of the approximation suffers greatly from even a single join. This occurs for two reasons:

1. The join of two uniform random samples is not a uniform random sample of the output of the join. Except in the special case where for both relations, each tuple joins with at most one tuple in the other relation, the join operator results in dependencies among join tuples.

2. The join of two random samples is typically a small number of tuples, even when the join selectivity is fairly high. For example, if the majority of the tuples in one relation *each* joined with a fixed set S of tuples comprising a tiny fraction of the tuples in the other relation, then with high probability, *none* of these tuples will be in the join of the samples of the relations since the tuples in $S$ will not appear in the sample with high probability.

Indeed the best known confidence interval bounds for such approximations are quite pessimistic. For example, it follows from the bounds in P. J. Haas, "Large-sample and deterministic confidence intervals for online aggregation," presented at *9th International Conf. on Scientific and Statistical Database Management,* 1998, that when the join-size is not large, as is frequently the case, the sample size must be at least quadratic in the maximum value of the join attribute, or a sizeable fraction of the relations, before we get any non-trivial confidence interval. Note that this problem arises even *with foreign key joins*. A 2-way join $r_1 \leftrightarrow r_2$, $r_1 \neq r_2$, is a foreign key join if the join attribute is a foreign key in $r_1$ (i.e., a key in $r_2$). For $k \geq \leftrightarrow 3$, a k-way join is a foreign key join if there is an ordering $r_1, r_2, ..., r_k$ of the relations being joined such that for $i = 2, 3, ..., k$, $s_{i-1} \leftrightarrow r_i$ is a 2-way foreign key join, where $s_{i-1}$ is the relation obtained by joining $r_1, r_2, ..., r_{i-1}$.

Our novel solution, *called join samples,* works well for any acyclic data warehouse schema with only foreign key joins. Such schema are common in data warehouses, and indeed the TPC-D benchmark reflects this scenario with its schema (see FIG. 6). This solution efficiently maintains selected samples of tuples from the output of various joins in part by storing only attributes of interest and by removing redundant sub-tuples. The basic idea is to leverage Lemma 1 and Lemma 2 below by maintaining one join sample for each base relation.

Lemma 1. The subgraph of $G$ on the $k$ nodes in any $k$-way foreign key join must be a connected subgraph with a single root node.

Proof. Consider an ordering $r_1, ..., r_k$ on the relations that satisfies the $k$-way foreign key join property given above. The proof is by induction, with the base case of a single node $r_i$. Let $1 < i \leq k$ and $s_{i-1} = r_1 \leftrightarrow ... \leftrightarrow r_{i-1}$. Assume that the subgraph $G_{i-1}$ on the $i$-$l$ nodes in $s_{i-1}$ is connected with a single root node $r_1$. Since $s_{i-1} \leftrightarrow r_i$ is a 2-way foreign key join, the join attribute must be a key in $r_i$. Thus, there is an edge directed from some node in $G_{i-1}$ to $r_i$, implying that $G_i = G_{i-1} \cup r_i$ is a connected subgraph of $G$. Hence there is a directed path in $G$ from $r_1$ to $r_i$. Since $G$ is acyclic, $r_i \neq r_1$, so $r_1$, which by the inductive assumption is the only root node in $G_{i-1}$, is the only root node of $G_i$. The lemma follows by induction.

Thus, for any k-way foreign key join there is a root node, which is denoted the *source relation* for the join. For example, in FIG. 6, in a 3-way foreign key join between P 650, PS 640, and S 660, the source relation is PS 640.

Lemma 2. There is a 1-1 correspondence between tuples in $r_1$ and tuples in any $k$-way foreign key join with source relation $r_1$.

Proof. By the definition of a join, for each tuple $\tau$ in the output of a join, there exists a tuple $\tau'$ in $r_1$ such that $\tau$ projected on the attributes in $r_1$ is $\tau'$. Conversely, we claim that for each tuple $\tau'$ in $r_1$ there is exactly one tuple $\tau$ in the $k$-way foreign key join. The claim is shown by induction. Consider an ordering $r_1, ..., r_k$ on the relations that satisfies the $k$-way foreign key join property given above. The claim trivially holds for the base case of a single relation $r_1$. Let $1 < i < k$ and $s_{i-1} = r_1 \leftrightarrow ... \leftrightarrow r_{i-1}$. Assume inductively that for each tuple $\tau'$ in $r_1$ there is exactly one tuple $\tau$ in $s_{i-1}$. Since $s_{i-1} \leftrightarrow r_i$ is a 2-way foreign key join, the join attribute must be a key in $r_i$. Thus, there is at most one tuple in $r_i$ joining with each tuple in $s_{i-1}$, and furthermore, due to foreign key integrity constraints, there is at least one such tuple. Hence, for each tuple $\tau'$ in $r_1$ there is exactly one tuple $\tau$ in $s_i = s_{i-1} \leftrightarrow r_i$. The claim, and hence the lemma, follows by induction.

From Lemma 1, we have that each node can be the source relation only for $k$-way foreign key joins involving its descendants in $G$. For each relation $r$, there is some *maximum foreign key join* with $r$ as the source relation. For example, in FIG. 6, $C \leftrightarrow N \leftrightarrow R$ is the maximum foreign key join with source relation $C$, and $L \leftrightarrow O \leftrightarrow C \leftrightarrow N1 \leftrightarrow Rl \leftrightarrow PS \leftrightarrow P \leftrightarrow S \leftrightarrow N2 \leftrightarrow R2$ is the maximum foreign key join with source relation $L$.

Join samples. For each node $u$ in $G$, corresponding to a relation $r_1$, we define $J(u)$ to be the output of the maximum foreign key join $r_1 \leftrightarrow r_2 \leftrightarrow ... \leftrightarrow r_k$ with source $r_1$. (If $u$ has no descendants in $G$, then $K = 1$ and $J(u) = r_1$.) Let $S_u$ be a uniform random sample of $r_1$. We define *a join sample*, $J(S_u)$, to be the output of $S_u \leftrightarrow r_2 \leftrightarrow ... \leftrightarrow r_k$. Our synopsis consists of $J(S_u)$ for all $u$ in $G$.

The utility of this synopsis can be observed by the following theorem, which is an immediate consequence of Lemma 2.

Theorem 3. Let $r_1 \leftrightarrow ... \leftrightarrow r_k$, $k \geq 2$, be an arbitrary $k$-way foreign key join, with source relation $r_1$. Let $u$ be the node in $G$ corresponding to $r_1$, and let $S_u$ be a uniform random sample of $r_1$. Let $A$ be the set of attributes in $r_1, ..., r_k$.

    ✎ $J(S_u)$ is a uniform random sample of $J(u)$ of size $|S_u|$.

    ✎ $r_1 \leftrightarrow ... \leftrightarrow r_k = \pi_A J(u)$, i.e., the projection of $J(u)$ on the attributes in $r_1, ..., r_k$

    ✎ $\pi_A J(S_u)$ is a uniform random sample of $r_1 \leftrightarrow ... \leftrightarrow r_k$ ($=\pi_A J(u)$) of size $|S_u|$.

Thus, we can extract from our synopsis a uniform random sample of the output of any $k$-way foreign key join, $k \geq 2$.

Two joins are *distinct* if they do not join the same set of relations. The next lemma shows that a single join sample can be used for a large number of distinct joins, especially for the star-like schemas popular for data warehouses.

Lemma 4. From a single join sample for a node whose maximum foreign key join has K relations, we can extract a uniform random sample of the output of between K - $1$ and $2^{K-1}$ - $1$ distinct foreign key joins.

Proof. The former case arises if all the descendants of the node form a line in $G$. The latter case arises if the node is the root of a star of all its descendants, as in a star schema.

Note that since Lemma 2 fails to apply in general for any relation other than the source relation, the joining tuples in any relation $r$ other than the source relation will not in general be a uniform random sample of $r$. Thus, distinct join samples are needed for each node.

A limitation of the solution of maintaining join samples is that for worst case schemas, the size of the maximum foreign key join can be exponential in the number of relations in the schema:

Lemma 5. There exists foreign key schema with $t$ relations such that the maximum foreign key join has 4 • $2^{(i-1)/3}$ - 3 relations.

Proof. Consider a "coat hanger" $H_i$ with root $r_i$. $H_{i+1}$ has root $r_{i+1}$ with two children $l$ and $r$ each of which join to $r_i$. It is easy to verify that the coat hanger $H_i$ has $3i+1$ nodes. Consider t relations which are the nodes of $H_{(i-1)/3}$ with edges between them depicting the foreign key relationships. Then it is easy to verify that the maximum foreign key join has $4 \cdot 2^{(i-1)/3}$ - 3 relations.

In such cases, the joins actually arising in the queries are used to decide how much of the maximum foreign key join to materialize.

Reducing the space needed. Recall that in Aqua, only attributes of interest and all tuples of small relations are stored. This reduces the columns stored for join sample tuples. To further reduce the footprint for join samples, Aqua can renormalize the tuples in $J(S_u)$ into their constituent relations and remove duplicates. To the extent that foreign keys are many-to-one, this will reduce the space, although the key will then be replicated. With this approach, when a tuple in $S_u$ is deleted, one can either (1) immediately determine which tuples in other relations to remove, if any, by either linear search, maintaining reference counts, etc., or (2) leave the other tuples in, and then garbage collect periodically by materializing $J(S_u)$ and discarding unused tuples. Alternatively, Aqua can renormalize as above, but take the union, excluding the $S_u$'s, of $J(S_u)$ for all $u$, and remove duplicates.

Lemma 6. For any node $u$ whose maximum foreign key join is a K-way join, the number of tuples in its renormalized join sample $J(S_u)$ is at most $K|S_u|$.

Proof. Each tuple in the (unnormalized) $J(S_u)$ contributes K tuples to the renormalized $J(S_u)$ (before duplicate removal).

As an example, for FIG. 6, if we store a single copy of $N$ and $R$, and hence remove them from $G$, then for $L$, $PS$, $O$, $C$, $P$, and $S$, the value of K is 6, 3, 2, 1, 1, and $I$, respectively. If we take $|S_u|$ to be the same for all $u$ in $G$ - $\{N, R\}$, then for all data distributions, the number of tuples in the synopsis is at most $14|S_u| \pm |N| + |R|$. To the extent that foreign keys are many-to-one, the space can be considerably smaller than this upper bound.

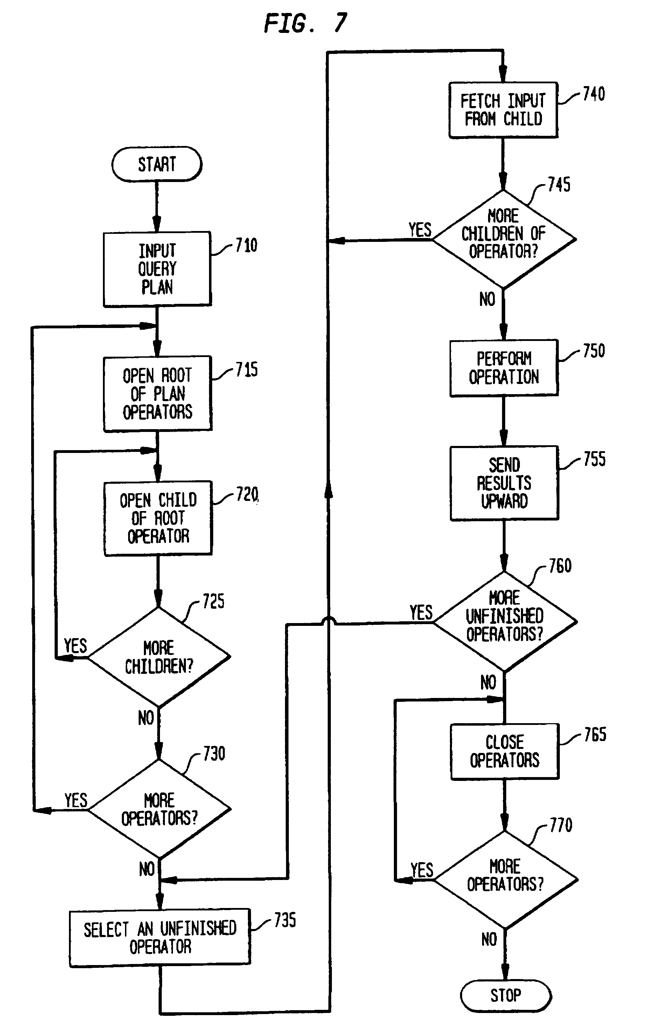

FIG. 7 illustrates the steps involved in processing a query in the approximate query engine 210 in Aqua. The key features of the approximate query engine 210 are (a) its rich set of query operators and (b) its easy extensibility. In step 710 a query plan is input to the system which contains a tree of operators. Operators correspond to distinct query operations, for example, select, hash or nested loop joins, sort, aggregate, read-from-file, etc. All operators are implemented as *iterators* with a standard interface and executed in a top-down fashion. In step 715 the *open* call is invoked on the root of the plan, which initializes the operator-specific data and in step 720 recursively calls *open* on each of its children. In step 725 the operator is checked to determine if it has any more children. If there are more children then processing loops back to step 720. If there are not any more children, in step 730 the root plan is checked for more operators. If there are more operators then processing loops back to step 715. If there are no more operators, in step 735 the system selects an unfinished operator. An operator is finished when no more results can be generated. In step 740 an operator fetches some of its input from a child (or from a database file in case *of the file read* operator). In step 745 the operator is checked to determine if it has any more children. If there are more children then processing loops back to step 740. If there are no more children, in step 750 the operator performs the relevant operation (if any). In step 755 the operator sends the results of the operation upwards so that it may be fetched by its parent. In step 760 the plan is checked to determine if there are any more unfinished operators. If there are then processing loops back to step 735. This process terminates when all the inputs to the query are exhausted and no more results can be generated. If there are no more unfinished operators, in step 765 the system invokes *close* on the operators which perform clean-up operations, for example, close the open tables, release memory. In step 770 the plan is checked for any open operators. If there are more open operators then processing loops back to step 765. If there are no more open operators then processing terminates.

An important feature of this design is the isolation of operators from each other, i.e., an operator does not need to know the nature of the operators generating its input and vice versa. For example, in the operator's view, the input could be coming from a simple file scan or from a complex query. This feature enables Aqua to process arbitrarily complex queries in a modular fashion and add (or modify) an existing query operator with localized changes. This is very useful in Aqua because it enables very easy implementation of various novel operators. For example, a *sample* operator was implemented, which samples its input stream and outputs randomly chosen tuples, either a fixed number (using reservoir sampling as is well known in the art) or a desired fraction of the input stream.

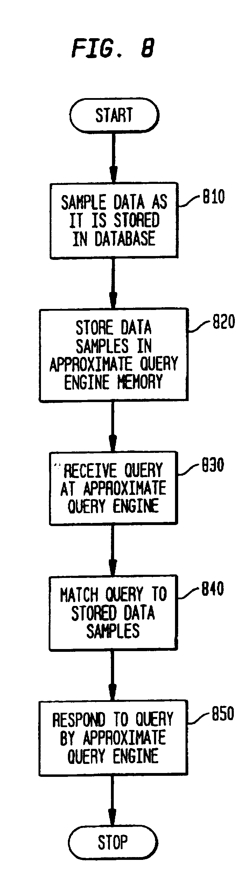

FIG. 8 illustrates steps in a first embodiment of the inventive method and computer-implemented invention. The basic Aqua approximate query engine 210 is augmented with routines to maintain a number of synopses on the data, many of which are normally stored in system catalogs, including:

    ⚬ For each relation, maintain a count of the number of tuples in the relation.

    ⚬ For small relations (hundreds of tuples or less), store all the tuples in the relation.

    ⚬ For all other relations, store join samples and various other synopses.

    ⚬ For each attribute that may be used in an AVG or SUM aggregate, maintain an upper bound and a lower bound on its range.

For each tuple stored, only attributes of interest are retained. The optimal selection of attributes to retain depends on the mix of queries. For example, descriptive strings such as comments are discarded when they are not needed to answer the queries or to be used to calculate meta-information. This reduces the footprint needed for each tuple, since descriptive strings often require many bytes. On the other hand, this choice implies that the system can not provide a reasonable approximate answer for queries on these attributes.

The steps in a first embodiment of the inventive method and computer-implemented invention are shown in FIG. 8. In step 810 data samples are obtained as the data is stored in the database. In step 820 the obtained data samples are stored in the memory associated with the approximate query engine 210, where the amount of memory required to store the data samples in the approximate query engine 210 is less than the entire data warehouse 110. In step 830 a query 130 is received at the approximate query engine 210. In step 840 the approximate query engine 210 matches the query 130 to the data samples stored in the memory associated with the approximate query engine 210. In step 850 the approximate query engine 210 sends a response 220 that contains the matched stored data samples obtained from step 840. For example, in one embodiment of step 840 and step 850, the source relation of the query is determined and the query is applied to the join sample associated with this relation.

New algorithms for incrementally maintaining the synopses used in Aqua, based on the batch arrival of new data and an occasional access to the (stored) base data, have been developed. These algorithms enable synopses to be kept effectively up-to-date at all times without any concurrency bottleneck. In an online environment in which updates and queries intermix, Aqua can not afford to maintain up-to-date synopses that require examining every tuple, such as the minimum and maximum value of an attribute, without creating a concurrency bottleneck. (Note that most of the synopses in Aqua are sampling-based, and hence require only infrequent updates.) In such environments, maintenance is performed only periodically. Approximate answers depending on synopses that require examining every tuple would not take into account the most recent trends in the data (that is, those occurring since maintenance was last performed), and hence could greatly decrease the accuracy guarantees. Note that the incremental maintenance algorithms can be used to compute all synopses from scratch, in one scan of the base data followed by indexed lookups on a small fraction of the keys, should such a re-computation be necessary.

Most of the synopses mentioned above can be maintained using known techniques. Counters are maintained by incrementing them as tuples are inserted and decrementing them as tuples are deleted. Uniform random samples are maintained as tuples are inserted and deleted using the algorithm we described in our August 1997 article, Gibbons et al., "Fast incremental maintenance of approximate histograms," *Proc. 23rd International Conf. on Very Large Data Bases,* pp. 446-475, incorporated herein by reference. Maximum and minimum values for attributes are maintained under insertions by comparing the new tuple with the current maximum or minimum. Under deletions, if the maximum or minimum is deleted, either (1) ignore the deletion, resulting in a conservative bound, (2) revisit the relation to extract the new maximum or minimum, (3) maintain a set of the largest and smallest values, and only perform (1) or (2) if the entire set is deleted, or (4) maintain a histogram on the number of values within each range, where the ranges could be, for example, powers of two. This would provide estimates on the maximum and minimum within a factor of 2 using only a logarithmic number of buckets, and without resorting to (2).

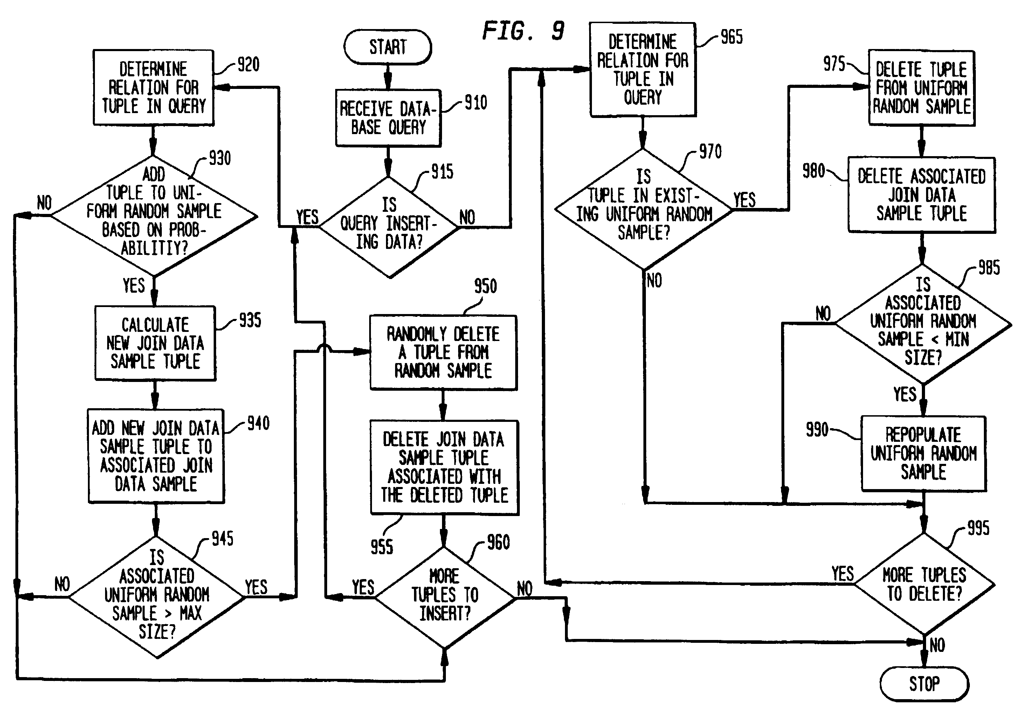

FIG. 9 illustrates steps in maintaining join samples in a first embodiment of the inventive method and computer-implemented invention. The samples $S_u$ under insertions and deletions to the relation $u$ are also maintained using the above referenced algorithm. To maintain $J(S_u)$ for all $u$ under insertions and deletions to any relation, Aqua relies on the integrity constraint on each foreign key to enable a faster maintenance algorithm.

The algorithm for maintaining a join sample $J(S_u)$ for each $u$ is as follows. Let $p_u$ be the current probability for including a newly arriving tuple for relation $u$ in the random sample $S_u$. On an insert of a new tuple $\tau$ into a base relation corresponding to a node $u$ in $G$, do the following. Let $u \leftrightarrow r_2 \leftrightarrow ... \leftrightarrow r_k$ be the maximum foreign key join with source $u$. (1) Add $\tau$ to $S_u$ with probability $p_u$. (2) If $\tau$ is added to $S_u$, add to $J(S_u)$ the tuple $\{\tau\} \leftrightarrow r_2 \leftrightarrow ... \leftrightarrow r_k$. This can be computed by performing at most K - 1 look-ups to the base data, one each in $r_2, ..., r_k$. (For any key already in $J(S_u)$, the look-ups for it or any of its "descendants" are not needed.) (3) If $\tau$ is added to $S_u$ and $S_u$ exceeds its target size, then select uniformly at random a tuple $\tau'$ to evict from $S_u$. Remove the tuple in $J(S_u)$ corresponding to $\tau'$.

On a delete of a tuple $\tau$ from $u$, first determine if $\tau$ is in $S_u$. If $\tau$ is in $S_u$, delete it from $S_u$, and remove the tuple in $J(S_u)$ corresponding to $\tau$. As in Gibbons et al., if the sample becomes too small due to many deletions to the sample, repopulate the sample by rescanning the base relations.

Note that this algorithm only performs look-ups to the base data with (small) probability $p_u$. Also, when a tuple is inserted into a base relation $u$, the join samples for any ancestors *of u* are never updated. Such updates would be costly, since these operations would be performed for every insert and for each ancestor *of u.* Instead, the system relies on the integrity constraints to avoid these costly updates.

Theorem 7. The above algorithm properly maintains all $S_u$ as uniform random samples of $u$ and properly maintains all join samples $J(S_u)$.

Proof. Due to the integrity constraints, for each edge from $w$ to $u$, there is exactly one tuple in $u$ *joining* with each tuple in $w$ at all times. Thus any subsequent tuple inserted into $u$ can not join with any tuple already in $w$, and any tuple deleted from $u$ can not join with a tuple still in $w$.

FIG. 9 illustrates the steps involved in the above algorithm. In step 910 a database query is received by the Approximate Query Engine. In particular, the query contains either new tuple information to be inserted into the database or a reference to tuple information already in the database that is to be deleted. In step 915 the query is checked to determine if the operation to be performed is an insert or a delete. If the operation is an insert, then in step 920 which relation in the database the query information is associated with is determined. In step 930 the tuple is added to the associated uniform random sample based on a current, calculated probability of adding the new tuple to its associated uniform random sample. If the tuple is added, in step 935 a new join data sample tuple is calculated. If the tuple is not added, (i.e., the "NO" branch of the decision in step 930 is taken) then processing is transferred to step 960 which is discussed below. In step 940, the newly calculated join data sample tuple is added to its associated join data sample. In step 945 the size of the associated uniform random sample is checked to determine if it has exceeded a maximum calculated target size. If it has, in step 950 a tuple is randomly deleted from the associated random sample. In step 955 the join data sample tuple associated with the deleted tuple is deleted from the associated join data sample. In step 960 it is determined if there are more tuples to be inserted. If there are, then processing loops back to step 920.

If the check in step 915 had determined the operation to be a delete (i.e., the "NO" branch of the decision in step 915 is taken), then in step 965 the relation associated with the first tuple to be deleted is determined. In step 970 it is determined if the tuple to be deleted is in an existing uniform random sample. If it is, in step 975 the tuple is deleted from the uniform random sample. In step 980 the join data sample tuple associated with the tuple deleted in step 975 is deleted from the associated join data sample. If the tuple is not in an existing uniform random sample, (i.e., the "NO" branch of the decision in step 970 is taken) then processing is transferred to step 995 which is discussed below. In step 985 the size of the associated uniform random sample is checked to determine if it has fallen below a minimum calculated target size. If it has, in step 990 the uniform random sample is repopulated by scanning the base relations. In step 995 it is determined if there are more tuples to be deleted. If there are, then processing loops back to step 965.

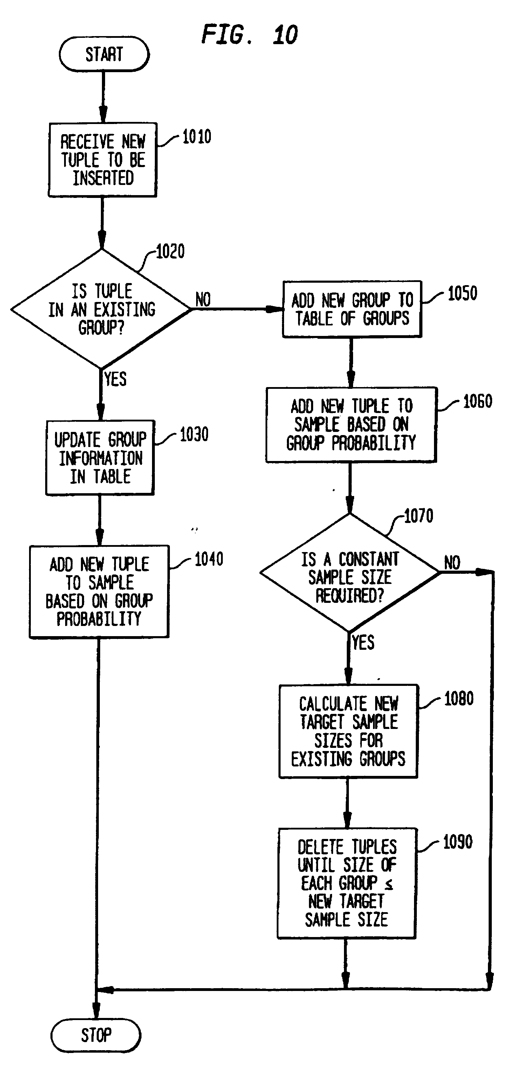

FIG. 10 illustrates steps in maintaining samples in a second embodiment of the inventive method and computer-implemented invention. Group by operators can pose difficulties for sampling-based estimation. Groups with relatively few members in the relation are expected to have relatively few members (possibly none) in a uniform random sample; this implies that the accuracy of estimations for such groups can be quite poor. Hellerstein et al. dealt with this problem in their work on online aggregation, providing a special B-tree-based indexing mechanism to allow different-sized groups to be accessed at equal rates.

Aqua improves the accuracy of approximations under group bys without special indexing mechanisms or (random) disk accesses, by biasing the samples according to the groups. In this approach, it is assumed that *a priori* knowledge of the group by attributes exists, but no other information about how the groups are populated need be assumed (for example, it need not be assumed which of the possible groups are empty). The technique works well for group bys on attributes in source relations of queries, however, for other group bys, the update time overheads to maintain the biased samples may be too large.

Consider one such a priori group by, for example, the group by on attributes Region and Type in FIG. 3. As data is inserted into the data warehouse, Aqua maintains a table of the groups that have occurred, together with a count of the number of tuples currently in the group. For example, in FIG. 3, the table of groups would have 5 entries. To ensure adequate representation in the sample for small groups, Aqua samples at a higher rate for such groups.

When a new tuple is inserted into a relation, Aqua determines its group. If it is an existing group, Aqua increments the count for the group. Otherwise, a new entry is added to the table, with count 1. The tuple is then added to the sample according to the desired sample rate for a group of its size.

Since each group is its own uniform random sample, there is considerable flexibility in deciding sample rates (for example, the sample rates need not be fair). To maintain a constant total sample size $n$, divided evenly among the (unknown number of) groups, Aqua performs reservoir sampling on each group such that if there are g groups, a target sample size of $n/g$ is maintained for each group. When a new group appears, Aqua decreases the target sample size and (lazily) evicts random tuples from each existing group. If the number of groups becomes large, Aqua can keep track of only the most popular groups. As which particular groups are and are not the most popular may change over time, Aqua can use the algorithm in Gibbons and Matias, November 1997 to maintain a list of the (approximately) most popular groups.

Quantifying the advantages of biased samples. The advantages of biased samples in producing smaller confidence intervals for aggregates can be quantified analytically. Consider a sample of size $n$ from a relation of size $m \gg n$. Consider COUNT, SUM, and AVG over expressions in the relation and let $MIN \geq 0$ and MAX be lower and upper bounds on the expression. The advantages arise from (1) maintaining the counts of each group, (2) ensuring that all groups are represented in the sample, and (3) allowing for more balanced sample sizes for each group. Consider each advantage in turn.

Maintaining the count, $m'$, of each group not only allows for accurate COUNT answers, but also improves the Hoeffding-based confidence bounds for SUM from

$$m \bullet \text{MAX} \sqrt{\frac{1}{2n} \ln \frac{2}{1-p}} \text{ to } m' \bullet (\text{MAX} - \text{MIN}) \sqrt{\frac{1}{2n} \ln \frac{2}{1-p}},$$

where $n' > 0$ is the number of sample tuples in the group.

The second advantage can be considered independently of the first by assuming that counts of groups are maintained in both the uniform and biased sampling cases. In a uniform random sample, each group of size $m'$ is expected to appear in the sample $m \approx n/m$ times, and will fail to appear in the sample with probability $> (1 - m'/(m-n))^n \approx e^{-m'n/m}$. For example, a group of size $m' = m/10n$ has over a 90% probability of not occurring in

$$m \bullet \text{MAX} \sqrt{\frac{1}{2n} \ln \frac{2}{1-p}}$$

the sample. For any group not appearing in the sample (i.e. $n' = 0$), then

is a sanity (upper) bound for SUM and SUM is deterministically in $[m' \bullet \text{MIN}, m' \bullet \text{MAX}]$. All that can be said for AVG is that it is deterministically in [MIN, MAX]. With biased sampling, we can ensure that all groups (or the most popular groups, if there are too many groups) have some minimum representation in the sample, at the expense of less samples for the larger groups.

The third advantage can be considered independently of the first two by assuming the addition of a single random representative of each group to the uniform sample. The advantage can be seen by considering the AVG aggregate. By Hoeffding-based bounds for AVG due to Haas ("Hoeffding inequalities for join-selectivity estimation and online aggregation," Technical Report RJ 10040, IBM Almaden Research Center, San Jose,

$$\frac{1}{g} \sum_{i=1}^{g} \frac{1}{\sqrt{n_i}},$$

CA, 1996), the average confidence bound over $g < n$ groups is proportional to where $n_i$ is the size of the sample for group $i$. This is minimized by taking $n_i = n/g$ for all $i$, which can be achieved with biased sampling using the reservoir sampling approach described above. With uniform sampling, the $n_i$ are expected to be proportional to the group size, and hence can vary widely. In the worst case of a single representative for all but one of the groups, the average confidence bound is a factor of

$$\approx \sqrt{n/g}$$

worse with uniform sampling than with biased sampling that takes $n_i = n/g$.

FIG. 10 illustrates the steps involved in the above algorithm. In step 1010 a database query is received by the approximate query engine 210. In particular, the query contains a new tuple to be inserted into a relation. In step 1020 it is determined if the new tuple is in an existing group in the relation. If it is, in step 1030 the count for that group is incremented by 1. In step 1040 the tuple is added to the sample based on the desired sample rate for the group.

If the check in step 1020 had determined that the tuple was in a new group not in the relation (i.e., the "NO" branch of the decision in step 1020 is taken), then in step 1050 a new group is added to the table of groups with a count of 1. In step 1060 the new tuple is added to the sample based on the desired sample rate for the group. In step 1070 it is determined if the system is to maintain a constant sample size, divided evenly between the existing groups. If it is, in step 1080 the new target sample sizes are calculated for each group. In step 1090 random tuples from each group are deleted until the group size is less than the new target size.

Analytical bounds based on sample sizes. One embodiment of the Aqua system focuses on *guaranteed* bounds, which provide guarantees to the user, but may be overly pessimistic in some cases. Aqua provides confidence intervals based on Hoeffding bounds. Since Aqua maintains join samples, $J(S_u)$, we can report confidence intervals based on Hoeffding-based formulas for *single-table queries* only, which are much faster to compute and much more accurate than the formulas involving joins. (For queries with non-foreign-key joins, Aqua uses multi-table formulas.)

To apply Hoeffding bounds, we use the bounds Aqua maintains on the minimum and maximum value for each attribute to compute guaranteed bounds on the minimum and maximum value of the expression occurring in a query, by considering how the attribute bounds may combine in the worst case. To the extent that a query predicate limits the minimum and maximum of any sub-expression in the expression, better bounds are used.

In contrast to the above embodiment, the *large sample* bounds are also know from Hellerstein, referenced above, which are only heuristic bounds. Large sample bounds contain the final answer with a probability *approximately* equal *to p* and are based upon central limit theorems. As noted in Hellerstein, the true probability can be much less than the nominal probability *p*. However, this paper does not report a method for determining when a finite sample is sufficiently large so that the bounds apply, and indeed the sample size needed can vary widely depending on the distribution of the values. Observing the values occurring in a sample is not sufficient in this regard. Thus, although it would be straightforward to consider large sample bounds, Aqua focuses instead on guaranteed bounds.

Evaluating sample size allocations. The following presents a strategy for evaluating the effectiveness of an allocation of sample sizes among the join samples for each relation. One goal is to provide simple, analytical bounds for the errors incurred by a broad class of queries.

We begin by considering the following simple characterization of a set, $S$, of queries with selects, aggregates, group bys and foreign key joins. For each relation, $R_i$, we have the fraction, $f_i$, of the queries in $S$ for which $R_i$ is either the source relation in a foreign key join or the sole relation in a query without joins. Next, we consider a range of representative (single table) selectivities, $Q$, for the predicates in queries, where the selectivities are based on the single table materialized foreign key join. (Such selectivities are the additional predicate selectivities beyond any join selectivities.) These selectivities could be determined by the query mix, but for simplicity and generality, assume representative selectivities of $q \in Q' = \{.01,.02,.05,.1,.2,.5,1\}$.

In what follows, we restrict our attention to the COUNT aggregate; this aggregate may be the most important for Aqua since it is used to provide size estimates for all set-valued queries, in addition to its use in aggregate queries. It is also fairly simple to analyze. The effectiveness of a sample for a COUNT aggregate is measured by the size of its relative error bound. For concreteness, we use Hoeffding-based error bounds that provide bounds on the relative error that are guaranteed to hold with *90%* probability. Consider a predicate with (unknown) selectivity $q$ followed by a COUNT, on a relation of $m$ tuples. Let $Error_q(n)$ be the relative error bound for the estimate based on a sample of size $n << m$. Let $n'$ be the number of sampled tuples that satisfy the predicate. Then $\mu_n = m/n \cdot n'$ is an unbiased estimator for the unknown count $q \cdot m$, and Hoeffding showed that

$$Pr(|\mu_n - q \cdot m| \leq m \sqrt{\frac{1}{2n}\ln\frac{2}{1-p}}) \geq p.$$

$$Error_q(n) = \frac{\sqrt{\ln(20)}}{q\sqrt{2n}} \approx \frac{1.22}{q\sqrt{n}}.$$

Dividing through by $q \cdot m$ to get relative error and *taking p = .9* yields
Thus, the relative error bound for COUNT decreases with the square root of the sample size.

Let *Error(n)* be the average relative error bound over the representative

$$Error(n) = \frac{1}{|Q|} \Sigma_{q \in Q} Error_q(n).$$

selectivities $Q$, i.e.,

$$Error(n) \approx \frac{1.22}{7\sqrt{n}} \cdot \Sigma_{q \in Q'} \frac{1}{q} = \frac{32.86}{\sqrt{n}}.$$

Using the example representative selectivities $Q'$, we have that
Thus, the average relative error bound decreases with the square root of the sample size, and is independent of the relation size *m*. Moreover, roughly 4K samples suffice to have an average error bound within a factor of 2. Note that this sample size is based on Hoeffding bounds, which are often quite conservative.

Finally, evaluate an allocation of sample sizes over all relations (for COUNT aggregates) as the weighted sums of the average relative error bounds. Let $n_1, n_2, ...,n_t$ be the sample sizes allocated to the relations $R_1, R_2, ..., R_t$ in the schema for join samples.

$$\Sigma_{i=1}^{t} f_{i} \bullet Error(n_i) \approx 32.86 \Sigma_{i=1}^{t} \frac{f_i}{\sqrt{n_i}}.$$

Then the weighted average relative error is

Conclusion. This disclosure describes one embodiment of the Aqua system and method for providing fast, highly-accurate approximate query answers. Since it is well known that join operators seriously degrade estimation accuracy, the system uses special techniques for handling the multi-way foreign key joins that are popular in OnLine Analytic Processing. Likewise, group bys can also degrade estimation accuracy, so the system uses a biased sampling technique for handling group bys. Aqua provides approximate answers using small, precomputed synopses of the underlying base data and new, efficient algorithms for incremental maintenance of all synopses used in the Aqua system. The system provides accuracy guarantees without any a priori assumptions on either the data distribution, the order in which the base data is loaded, or the layout of the data on the disks.

Analytical bounds and experimental results on TPC-D queries demonstrate Aqua's effectiveness, even in the presence of data distribution changes. Aqua is the first system to provide fast (no accesses to the base data at query time), highly-accurate approximate answers for a broad class of queries that arise in data warehousing scenarios.

Since Aqua provides answers typically without accessing the base data, it can be physically distant from the data warehouse during query time, allowing for considerable flexibility. For example, unlike previous systems (such as those in Table 3), Aqua can provide approximate answers even when the base data is unavailable.

While this embodiment of the current system focuses on answers to broad classes of queries, special features can be added to Aqua to improve the accuracy of specific classes of queries, such as those reported in: N. Alon, Y. Matias, and M. Szegedi, "The space complexity of approximating the frequency moments," *Proc. 28th ACM Symp. on the Theory of Computing,* pp. 20-29, May 1996; Gibbons et al., August 1997; Barbar< et al., 1997; and Ganti and Poosala, November 1997.

What has been described is merely illustrative of the application of the principles of the present invention. Other arrangements and methods can be implemented by those skilled in the art without departing from the spirit and scope of the present invention.

### Claims

1. A method of responding to a query of a database comprising the steps of

> sampling data as data is stored in said database,
> storing said data samples in memory associated with an approximate query engine, said data samples requiring less memory space than the data stored in said database,
> receiving said query at said approximate query engine,
> matching by said approximate query engine said query of said database to said stored data samples, and
> responding by said approximate query engine to said query with said matched stored data samples.

2. A method as recited in claim 1, wherein said data samples comprise synopsis data structures.

3. A method as recited in claim 1, further comprising the steps of responding to said query with functions of said matched stored data samples.

4. A method as recited in claim 1, wherein said response comprises approximate answers and an accuracy measure which for example provides a guaranteed bound.

5. A method as recited in claim 4, wherein said guaranteed bound is stated as an error limit around said approximate answer, said error limit having for example a maximum and a minimum value.

6. A method as recited in claim 1, further comprising the step of periodically returning to said database by said approximate query engine.

7. A method as recited in claim 6, wherein said return to said database is either to update or repopulate said stored data samples, or occurs at a periodic update interval, or occurs upon the event of a query.

**8.** A method as recited in claim 1 further comprising the step of aggregating by said approximate query engine of data samples as a histogram, said approximate answer for example comprising an exemplary item of a list of items.

**9.** A method as recited in claim 8, wherein said aggregation step comprises the result of one of averaging, summing and counting.

**10.** A method as recited in claim 1, wherein said data samples are selected according to a probabilistic function, said probabilistic function being for example biased according to groups such that groups with fewer tuples in the database are sampled at a higher rate.

**11.** A method as recited in claim 1, further comprising the steps, in the event an approximate answer cannot be provided in a response to a query, of sampling said database to obtain a synopsis data structure and storing said obtained synopsis data structure in memory associated with said approximate query engine.

**12.** A method as recited in claim 3, wherein said response comprises estimated meta-information and a set of representative tuples, said meta-information for example comprising an estimate and confidence interval for the size of the exact answer, said representative tuples for example being tuples from the exact answer selected either uniformly at random or biased according to a specific criterion.

**13.** A method as recited in claim 12, wherein said representative tuples are either possible tuples with a similarity measure, or are each comprised of one or more of the fields comprising tuples in the exact answer.

**14.** A method as recited in claim 6, wherein said data samples include samples of database join results, such as join data samples.

**15.** A computer-readable medium having computer-executable instructions for performing the steps of the method recited in claim 1, or 3, or 6, or 8, or 11.

**16.** A method of responding to a query of a database comprising the steps of

allocating the sizes of said data samples based on a weighted average relative error.

**17.** A method of responding to a query of a database as recited in claim 16, wherein said weighted average relative error is approximated as a constant value times the sum of the fraction of each query in said data sample for which the relation is either the source relation in a foreign key join or the sole relation in a query without joins divided by the square root of the sample size of said relation for all said relations in said data sample.

**18.** A computer-readable medium having computer-executable instructions for performing steps comprising

updating, in response to a query of a database, a plurality of data samples in memory associated with an approximate query engine, said data samples requiring less space than the data stored in said database, determining whether said query is inserting or deleting data from said database, if said query is inserting data, for each tuple,
inserting said tuple into said data sample, and if said query is deleting data, for each tuple,
if said tuple is in said data sample, then deleting said tuple.

**19.** A computer-readable medium having computer-executable instructions as recited in claim 18, wherein said inserting is based on a predetermined probability, or said data samples comprise a plurality of random samples and a plurality of join data samples, said plurality of random samples being for example uniformly selected.

**20.** A computer-readable medium as recited in claim 19, wherein said inserting comprises the steps of

determining the database relation for said tuple,
adding said tuple to one of said plurality of random samples associated with said relation based on a predetermined probability, and
if said tuple is added to said random sample,

(a) computing a new join data sample tuple using said tuple,

(b) adding said new join data sample tuple to a join data sample associated with said relation, and

(c) if said random sample exceeds a maximum size,

(i) randomly selecting one of said tuples in said random sample,

(ii) deleting said randomly selected tuple from said random sample, and

(iii) deleting the join data sample tuple associated with said tuple from said join data sample.

**21.** A computer-readable medium having computer-executable instructions as recited in claim 20, wherein said deleting comprises the steps of

determining a relation for said tuple,
if said tuple is in an existing random sample,

(a) deleting said tuple from said existing random sample, and

(b) deleting the join data sample tuple associated with said tuple from said associated join data sample, and

if any of said plurality of random samples becomes less than a predetermined minimum required size, repopulating each of said plurality of random samples found to be less than said predetermined minimum required size with new tuples from said database.

**22.** A computer-readable medium having computer-executable instructions for performing steps comprising

maintaining a table of groups that have occurred wherein said table of groups contains at least a count of the sample size of the number of tuples in each group listed in said table of groups,
selecting a sampling rate for each of said groups based on a size of said group wherein said sampling rate is increased for said group with said size that is less than a predetermined minimum size until said size of said group is greater than or equal to said predetermined minimum size, and
adding a new tuple inserted into a relation to one of said groups.

**23.** A computer-readable medium having computer-executable instructions as recited in claim 22, wherein said adding comprises the steps of

determining in which said group said new tuple inserted into said relation belongs,
if said new tuple is in an existing group,

(a) incrementing said count associated with said existing group, and

(b) adding said new tuple based on said sampling rate of said existing group, and

if said new tuple is in a new group,

(a) adding said new group to said table of groups with a count of 1,

(b) adding said new tuple based on said sampling rate of said existing group, and if the total sample size exceeds a desired threshold,

(a) calculating a new target sample size for each of said existing groups, and

(b) evicting random tuples from each of said existing groups until the size of said existing groups is less than or equal to said new target sample size.

**24.** A computer-readable medium having computer-executable instructions as recited in claim 23, further comprising the step of

if the number of said groups that have occurred exceeds a desired threshold, randomly evicting said groups from said table of groups until the number of said groups is less than or equal to said threshold, the evicting of said random groups being for example performed according to a probability function that favors the eviction of said groups with small counts.

# FIG. 1

# FIG. 2

## FIG. 3

300

| THE EXACT ANSWER | | | |
|---|---|---|---|
| REGION | TYPE | AVERAGE SALES | MINIMUM SALES |
| EASTERN | RETAIL | 12435 | 4035 |
| EASTERN | OUTLET | 7389 | 1227 |
| CENTRAL | RETAIL | 14837 | 3928 |
| WESTERN | RETAIL | 16726 | 4399 |
| WESTERN | OUTLET | 8874 | 389 |

## FIG. 4

400   420

| AN APPROXIMATE ANSWER | | | |
|---|---|---|---|
| REGION | TYPE | AVERAGE SALES | MINIMUM SALES |
| EASTERN | RETAIL | 12000±800 | 4100±400 |
| EASTERN | OUTLET | 7200±800 | 1200±400 |
| CENTRAL | RETAIL | 14500±800 | 3800±400 |
| CENTRAL | OUTLET | <500 | <500 |
| WESTERN | RETAIL | 17000±800 | 4100±400 |
| WESTERN | OUTLET | 8900±800 | <500 |

430

## FIG. 5

| EXACT ANSWER | APPROXIMATE ANSWER |
|---|---|
| AGGREGATE VALUES | FOR EACH AGGREGATE VALUE:<br>1. ESTIMATED VALUE OR SANITY BOUND<br>2. ACCURACY MEASURE |
| SET OF TUPLES | 1. ESTIMATED META-INFORMATION ON THE OUTPUT,<br>    i.e., A COLLECTION OF (VALUE, ACCURACY MEASURE) PAIRS.<br>2. REPRESENTATIVE TUPLES, EITHER:<br>    a. RANDOMLY-SELECTED CERTAIN,<br>    b. BIASED-SELECTED CERTAIN, WITH CRITERION,<br>    c. ARBITRARY CERTAIN, OR<br>    d. POSSIBLE, WITH SIMILARITY MEASURE. |

## FIG. 6

**FIG. 7**

# FIG. 8

START

SAMPLE DATA AS
IT IS STORED
IN DATABASE — 810

STORE DATA
SAMPLES IN
APPROXIMATE QUERY
ENGINE MEMORY — 820

RECEIVE QUERY
AT APPROXIMATE
QUERY ENGINE — 830

MATCH QUERY TO
STORED DATA
SAMPLES — 840

RESPOND TO QUERY
BY APPROXIMATE
QUERY ENGINE — 850

STOP

FIG. 9

EP 0 965 928 A2

## FIG. 10

```
        ┌─────────┐
        │  START  │
        └─────────┘
             │
             ▼
      ┌──────────────┐
      │ RECEIVE NEW  │── 1010
      │ TUPLE TO BE  │
      │  INSERTED    │
      └──────────────┘
             │
             ▼
          ╱─────╲ 1020                  ┌──────────────┐
         ╱ IS TUPLE ╲    NO             │ ADD NEW GROUP TO │── 1050
        ╱ IN AN EXISTING ╲──────────────▶│ TABLE OF GROUPS  │
         ╲   GROUP?    ╱                 └──────────────┘
          ╲─────╱                              │
             │ YES                             ▼
             ▼                          ┌──────────────┐
      ┌──────────────┐                  │ ADD NEW TUPLE TO │── 1060
      │ UPDATE GROUP │── 1030           │ SAMPLE BASED ON  │
      │ INFORMATION  │                  │ GROUP PROBABILITY│
      │   IN TABLE   │                  └──────────────┘
      └──────────────┘                         │
             │                                 ▼
             ▼                              ╱─────╲ 1070
      ┌──────────────┐                    ╱ IS A CONSTANT ╲   NO
      │ ADD NEW TUPLE│── 1040            ╱ SAMPLE SIZE     ╲─────┐
      │  TO SAMPLE   │                    ╲  REQUIRED?     ╱     │
      │ BASED ON GROUP│                    ╲─────╱              │
      │ PROBABILITY  │                        │ YES             │
      └──────────────┘                        ▼                 │
             │                         ┌──────────────┐         │
             │                         │ CALCULATE NEW│── 1080  │
             │                         │ TARGET SAMPLE│         │
             │                         │  SIZES FOR   │         │
             │                         │ EXISTING GROUPS│       │
             │                         └──────────────┘         │
             │                                │                 │
             │                                ▼                 │
             │                         ┌──────────────┐         │
             │                         │ DELETE TUPLES│── 1090  │
             │                         │ UNTIL SIZE OF│         │
             │                         │ EACH GROUP ≤ │         │
             │                         │  NEW TARGET  │         │
             │                         │ SAMPLE SIZE  │         │
             │                         └──────────────┘         │
             │                                │                 │
             ◀────────────────────────────────┴─────────────────┘
             │
             ▼
        ┌─────────┐
        │  STOP   │
        └─────────┘
```